# EUROPÄISCHE PATENTSCHRIFT

(11) **EP 3 315 322 B1**
(45) Veröffentlichungstag und Bekanntmachung des Hinweises auf die Patenterteilung: **18.03.2020**
(21) Anmeldenummer: 17181996.4
(22) Anmeldetag: 19.07.2017
(51) Int. Cl.: B60C 9/00, B60C 15/06, B60C 9/04

(54) **WULSTVERSTÄRKER ZUR MECHANISCHEN VERSTÄRKUNG**
BEAD REINFORCING ELEMENT FOR MECHANICAL REINFORCEMENT
RENFORT D'APPUI DE RENFORCEMENT MÉCANIQUE

(30) Priorität: 26.10.2016 DE 102016221021
(43) Veröffentlichungstag der Anmeldung: 02.05.2018
(73) Patentinhaber: Continental Reifen Deutschland GmbH, 30165 Hannover (DE)
(72) Erfinder: Kraus, Martin Josef, 31162 Bad Salzdetfurth (DE)
(74) Vertreter: Finger, Karsten

(56) Entgegenhaltungen:
- JP-A- 2009 208 725
- US-A1- 2011 198 008
- US-A1- 2014 008 003

## Beschreibung

Die vorliegende Erfindung bezieht sich auf einen Wulstverstärker zur mechanischen Verstärkung eines Wulstes eines Luftreifens. Dabei weist der Wulstverstärker mindestens einen Cord auf. Dabei ist der mindestens eine Cord aus mindestens einer metallischen Legierung ausgebildet. Ferner weist der mindestens eine Cord eine Innenlage und eine Außenlage auf. Dabei weist die Innenlage mindestens ein Innen-Filament auf und die Außenlage weist mindestens ein Außen-Filament auf.

Ein Innen-Filament oder ein Außen-Filament ist jeweils aus mindestens einer Faser ausgebildet, wobei es sich bei der mindestens einen Faser beispielsweise um einen Draht handelt.

Der Draht kann beispielsweise aus einem Metall oder einem Kunststoff ausgebildet sein.

Aus dem Stand der Technik sind Wulstverstärker zur mechanischen Verstärkung eines Wulstes eines Luftreifens bekannt. Dabei sind insbesondere Corde zur Nutzung in einem Wulstverstärker bekannt. Die Corde weisen dabei zur Erhöhung ihrer mechanischen Stabilität eine Cordwendel auf.

So wird beispielsweise in der EP 2 237 973 B1 ein Reifen mit einer verstärkten Wulststruktur offenbart. Die Verstärkungen der Wulststruktur sind dabei durch Corde ausgebildet, wobei die Corde Cordwendeln aufweisen.

Ferner sind aus der US2011198008A1, aus der JP2009208725A sowie aus der US2014008003A1 Wulstverstärker bekannt, wobei die Wulstverstärker aus Corden ausgebildet sind.

Bei einer Cordwendel handelt es sich um eine um den Cord gewickelte Draht- oder Metallverstärkung. Bei einer Cordwendel handelt es sich beispielsweise um einen spiralförmig um den Cord gewickelten Draht. Der Draht ist insbesondere aus einer Metalllegierung, bevorzugt aus einer Stahllegierung ausgebildet. Diese Cordwendel wird an den Cord anliegend zur Sicherstellung einer mechanischen Kompaktheit des Cordes eingesetzt.

Bei den aus dem Stand der Technik bekannten Corden zur Verstärkung eines Wulstes eines Luftreifens kann die Herstellung und die Anwendung des Cordes aufwändig gestaltet sein, da zu einer Erhöhung seiner Stabilität eine Cordwendel um den eigentlichen Cord gewickelt werden muss. Darüber hinaus kann die Herstellung eines Cordes mit einer Cordwendel mit höheren Kosten verbunden sein, da die Bereitstellung der Cordwendel selbst mit Kosten verbunden ist. Die Bereitstellung des Wulstverstärkers selbst kann somit aufwändig und mit hohen Kosten verbunden sein.

Der Erfindung liegt daher die Aufgabe zugrunde, einen verbesserten Cord als Wulstverstärker bereitzustellen.

Die Aufgabe wird erfindungsgemäss durch die Ausbildung eines Fahrzeugluftreifens gemäss den Merkmalen von Anspruch 1 gelöst.

Ferner umfasst die Erfindung, dass eine erste Schlaglänge des mindestens einen Innen-Filaments von einer zweiten Schlaglänge des mindestens einen Außen-Filaments verschieden ist. Bei einer Schlaglänge handelt es sich um die Länge einer Strecke eines Innen-Filaments in der Innenlage oder eines Außen-Filaments in der Außenlage eines Cordes, die das Innen-Filament oder das Außen-Filament für eine Drehung von 360° innerhalb der Innenlage beziehungsweise innerhalb der Außenlage misst.

Durch den Umstand, dass eine erste Schlaglänge des mindestens einen Innen-Filaments von einer zweiten Schlaglänge des mindestens einen Außen-Filaments verschieden ist, wird ein Cord bereitgestellt, der eine ausreichend hohe mechanische Stabilität aufweist. Diese mechanische Stabilität ist sowohl in der beschichtenden Verarbeitung des Cordes , beispielsweise mittels Kalander oder Umspritzextruder, wobei der mindestens eine Cord beispielsweise mit einer Elastomermischung umgeben wird, als auch im Einsatz des Luftreifens, in dem der Cord als Wulstverstärker verwendet wird, insbesondere im Einsatz als Wulstverstärker eines Radialluftreifens in einem Schwerlasteinsatz, erforderlich, um mögliche Beschädigungen des Cordes zu vermeiden.

Dadurch, dass die erste Schlaglänge des mindestens einen Innen-Filaments von einer zweiten Schlaglänge des mindestens einen Außen-Filaments verschieden ist, können die einzelnen Corde Widerstandskräfte gegenüber einem möglichen Zugbruch des Cordes von beispielsweise bis 810 Newton oder beispielsweise bis 1550 Newton aufweisen. Insbesondere wird dadurch, dass die erste Schlaglänge des mindestens einen Innen-Filaments von einer zweiten Schlaglänge des mindestens einen Außen-Filaments verschieden ist, bei dem Innen-Filament eine Reaktion auf mechanische Einwirkung auf den Cord hervorgerufen, die von der Reaktion des Außen-Filaments auf dieselbe mechanische Einwirkung verschieden ist. Ursächlich für die unterschiedlichen Reaktionen sind die verschiedenen Schlaglängen und die mit den verschiedenen Schlaglängen einhergehenden geometrischen und konstruktiven Unterschiede der Filamente. So können durch die unterschiedlichen Reaktionen der Filamente auf die Kräfte, die auf die Filamente einwirken, unterschiedliche Zugkräfte und Kompressionskräfte auf die Filamente resultieren. Die Unterschiedlichkeit der Zugkräfte und der Kompressionskräfte kann unter anderem zu einem Ausgleich dieser Zugkräfte und Kompressionskräfte führen.

Diese Zugkräfte und Kompressionskräfte werden beispielsweise bei einem Durchlaufen des Luftreifens durch seine Bodenaufstandsfläche in einem Schwerlasteinsatz generiert.

Durch die Verschiedenheit der Schlaglängen werden ferner verschiedene Winkel eines Verlaufs der Filamente entlang des Cordes und in Bezug zu einer Umlaufrichtung des Luftreifens geschaffen. Diese Verschiedenheit der Winkel kann auch zu einem Ausgleich der Zugkräfte und der Kompressionskräfte, die auf den Luftreifen und auch auf den Cord einwirken, führen.

Hintergrund des Ausgleichs der Zugkräfte und der Kompressionskräfte sind wiederum die unterschiedlichen mechanischen Reaktionen des Innen-Filaments im Vergleich zu dem Außen-Filament, die durch die verschiedenen Winkel der Filamente entlang des Cordes und in Bezug zu einer Umlaufrichtung des Luftreifens bewirkt werden.

Die Verwendung einer Cordwendel zur Erhöhung der mechanischen Stabilität ist dadurch nicht erforderlich. Dadurch, dass die Verwendung der Cordwendel nicht erforderlich ist, kann ein Arbeitsschritt bei der Anwendung und Herstellung des Cordes vermieden werden, da die Anbringung der Cordwendel entfällt.

Darüber hinaus wird die Bereitstellung des Cordes selbst kostengünstiger, da auf die Cordwendel verzichtet werden kann. Der Einsatz und die Anwendung des Cordes als Wulstverstärkers sind somit kostengünstiger und aufwandsgeringer gestaltet. Insgesamt wird folglich ein verbesserter Cord als Wulstverstärker bereitgestellt.

Weitere vorteilhafte Ausgestaltungsformen der Erfindung sind Gegenstand der Unteransprüche.

Gemäß einer vorzugsweisen Ausgestaltungsform der Erfindung ist die erste Schlaglänge des mindestens einen Innen-Filaments kleiner als die zweite Schlaglänge des mindestens einen Außen-Filaments.

Durch den erfindungsgemäßen Umstand, wonach die erste Schlaglänge kleiner als die zweite Schlaglänge ist, wird ein mechanisch besonders stabiler Cord bereitgestellt. Hintergrund ist, dass das Innen-Filament dann im Vergleich zu dem Außen-Filament stabiler auf Krafteinwirkungen reagiert als das Außen-Filament und darüber hinaus eine mechanisch stabilisierende Funktion in Bezug auf das Außen-Filament wahrnimmt. Das Innen-Filament kann somit aufgrund seiner im Vergleich zum Außen-Filament kürzeren Schlaglänge auch zur mechanischen Stabilisierung des Außen-Filaments beitragen.

Gemäß der Erfindung beträgt die erste Schlaglänge des mindestens einen Innen-Filaments 3,8mm und die zweite Schlaglänge des mindestens einen Außen-Filaments beträgt 6,2mm.

Gemäß einer nächsten vorzugsweisen Ausgestaltungsform der Erfindung weist das mindestens eine Innen-Filament einen Durchmesser von 0,2mm bis 0,22mm auf und/oder das mindestens eine Außen-Filament weist einen Durchmesser von 0,18mm bis 0,22mm auf.

Durch den Umstand, dass das mindestens eine Innen-Filament einen Durchmesser von 0,2mm bis 0,22mm auf weist und/oder das mindestens eine Außen-Filament einen Durchmesser von 0,18mm bis 0,22mm aufweist und insbesondere durch den Umstand, dass das mindestens eine Innen-Filament einen Durchmesser aufweist, der von dem Durchmesser des mindestens einen Außen-Filaments verschieden ist, wird eine genügende Durchdringung des Cordes mit einer auszuwählenden Elastomermischung in der Innenlage als auch in der Außenlage gewährleistet. Desweiteren wird durch diesen Umstand gewährleistet, dass eine Übertragung resultierender Kräfte, die durch Außeneinwirkung auf den Cord entstehen, und eine Verteilung einer resultierenden Arbeit zwischen den Filamenten der Innenlage und der Außenlage, insbesondere während eines Durchlaufens des Luftreifens durch seine Bodenaufstandsfläche, in genügendem Masse stattfindet.

Gemäß der Erfindung beträgt eine Anzahl von Innen-Filamenten 4 und beträgt eine Anzahl von Außen-Filamenten 4 bis 11 und insbesondere 9.

Insbesondere ist eine Anzahl von mindestens 3 oder 4 Innen-Filamenten in der Innenlage bevorzugt, insbesondere bei Schlaglängen des Innen-Filaments die kleiner oder gleich 6,6 mm sind. Diese Anzahlen der Innen-Filamente führen zu einer gleichmäßigen Verteilung der Innen-Filamente in der Innenlage.

Gemäß einer weiteren vorzugsweisen Ausgestaltungsform der Erfindung beträgt die Anzahl der Fasern oder der Drähte in den Innen-Filamenten und/oder den Außen-Filamenten mindestens 1 bis 5.

Gemäß einer nächsten vorzugsweisen Ausgestaltungsform der Erfindung beträgt ein Durchmesser des Cordes 0,72mm bis 1,24mm.

Durch den Umstand, dass der Durchmesser des Cordes 0,72mm bis 1,24mm beträgt, können insbesondere die vorteilhaften Durchmesser, zum Beispiel ein Durchmesser des Innen-Filaments von 0,2mm bis 0,22mm und ein Durchmesser des Außen-Filaments von 0,18mm bis 0,22mm, und die vorteilhaften Schlaglängen, zum Beispiel eine erste Schlaglänge des mindestens einen Innen-Filaments von 3,8mm bis 6,6mm und/oder eine zweite Schlaglänge des mindestens einen Außen-Filaments von 6,2mm bis 13,5mm, sichergestellt werden.

Gemäß einer nächsten vorzugsweisen Ausgestaltungsform der Erfindung weist der Cord ein Längengewicht von mindestens 2,52 g/m auf.

Durch den Umstand, dass der Cord ein Längengewicht von mindestens 2,52 g/m aufweist, können insbesondere die vorteilhaften Durchmesser, zum Beispiel ein Durchmesser des Innen-Filaments von 0,2mm bis 0,22mm und ein Durchmesser des Außen-Filaments von 0,18mm bis 0,22mm, und die vorteilhaften Schlaglängen, zum Beispiel eine erste Schlaglänge des mindestens einen Innen-Filaments von 3,8mm bis 6,6mm und/oder eine zweite Schlaglänge des mindestens einen Außen-Filaments von 6,2mm bis 13,5mm, sichergestellt werden.

Gemäß einer nächsten vorzugsweisen Ausgestaltungsform der Erfindung handelt es sich bei der metallischen Legierung um einen Stahl. Durch den erfindungsgemäßen Umstand, wonach es sich bei der metallischen Legierung um einen Stahl handelt, wird ein mechanisch belastbarer und haltbarer Cord bereitgestellt. Hintergrund der Belastbarkeit und der Haltbarkeit des Cordes sind die physikalischen Eigenschaften des Stahls.

Gemäß einer nächsten vorzugsweisen Ausführungsform der Erfindung weist der Cord eine Messingauflage auf.

Gemäß einer weiteren vorteilhaften Ausgestaltungsform der Erfindung weist die Messingauflage zwischen 28 Gew.% Zink und 45 Gew.% Zink, bevorzugt zwischen 30 Gew.% Zink und 37 Gew% Zink, und/oder zwischen 55 Gew.% Kupfer und 72 Gew.% Kupfer, bevorzugt zwischen 63 Gew.% Kupfer und 70 Gew.% Kupfer, auf.

Durch den Umstand, wonach die Messingauflage zwischen 28 Gew.% Zink und 45 Gew.% Zink, bevorzugt zwischen 30 Gew.% Zink und 37 Gew% Zink, und/oder zwischen 55 Gew.% Kupfer und 72 Gew.% Kupfer , bevorzugt zwischen 63 Gew.% Kupfer und 70 Gew.% Kupfer, aufweist, wird eine Messingauflage bereitgestellt, die eine erhöhte mechanische Stabilität aufweist.

Darüber hinaus wird eine belastbare chemische und physikalische Bindung einer den Cord umgebenden Kautschukmatrix oder einer Elastomermischung an die Messingauflage insbesondere bei einem Vorgang der Vulkanisation sichergestellt. Die Messingauflage ist insbesondere mindestens teilweise aus einem Alpha-Messing ausgebildet.

Dadurch wird der Einsatz des Wulstverstärkers insgesamt zuverlässiger gestaltet.

Gemäß einer nächsten vorzugsweisen Ausgestaltungsform der Erfindung weist die Messingauflage ein relatives Gewicht von 3,0g/kg Draht bis zu 4,8 g/kg Draht auf. Bei dem Draht handelt es sich um einen einzelnen Draht, der Bestandteil des Innen-Filaments oder des Außen-Filaments ist.

Durch den Umstand, wonach die Messingauflage ein relatives Gewicht von 3,0g/kg Draht bis zu 4,8 g/kg Draht aufweist, wird eine optimale Dicke der Messingauflage mit Blick auf die Bildung einer notwendigen chemischen und physikalischen Bindung an eine Kautschukmatrix einer den Cord räumlich umgebenden Elastomermischung sichergestellt. Ursächlich für diese Sicherstellung ist eine Bildung von Dendriten der Elastomermischung die während einer Vulkanisation hervorgerufen wird. Über diese Dendriten wird eine Anbindung der Elastomermischung an die Messingauflage gewährleistet.

Gemäß einer weiteren vorzugsweisen Ausgestaltungsform der Erfindung sind das mindestens eine Innen-Filament und/oder das mindestens eine Außen-Filament aus je einer, zwei, drei oder vier Fasern ausgebildet. Möglich sind insbesondere auch höhere Anzahlen von Fasern je Innen-Filament und/oder Außen-Filament.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1 eine schematische Darstellung eines erfindungsgemäßen Wulstverstärkers in einem Luftreifen;
Fig. 2.1, 2.2, 2.3 eine schematische Darstellung eines Cordes eines Wulstverstärkers;
Fig. 3 eine schematische Darstellung eines Cordes eines Wulstverstärkers;
Fig. 4.1, 4.2, 4.3, 4.4, 4.5 eine schematische Darstellung eines Cordes eines Wulstverstärkers;
Fig. 5 eine schematische Darstellung einer Radialschnittansicht durch einen Wulst eines Luftreifens.

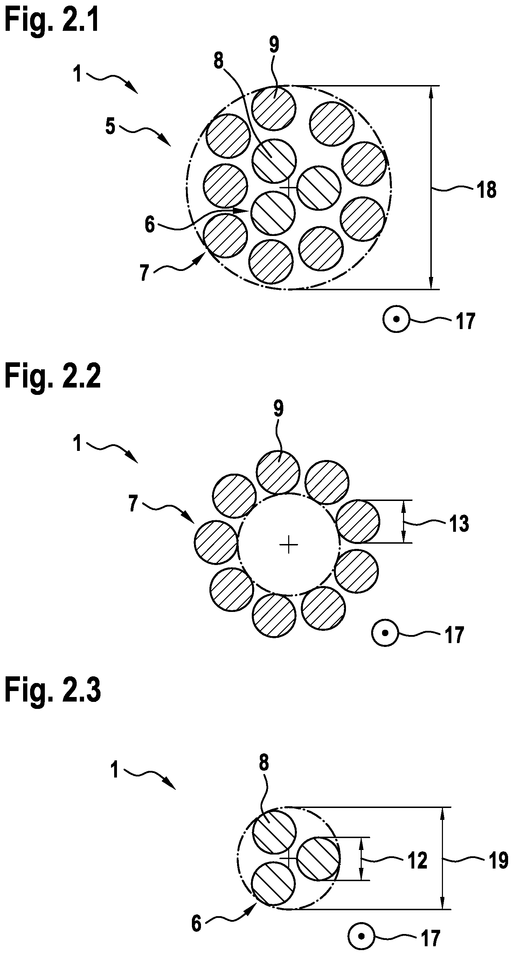

Die in den Abbildungen 2.1, 2.3, 3 und 4.1 dargestellten Gegenstände sind aus dem Stand der Technik bekannt.

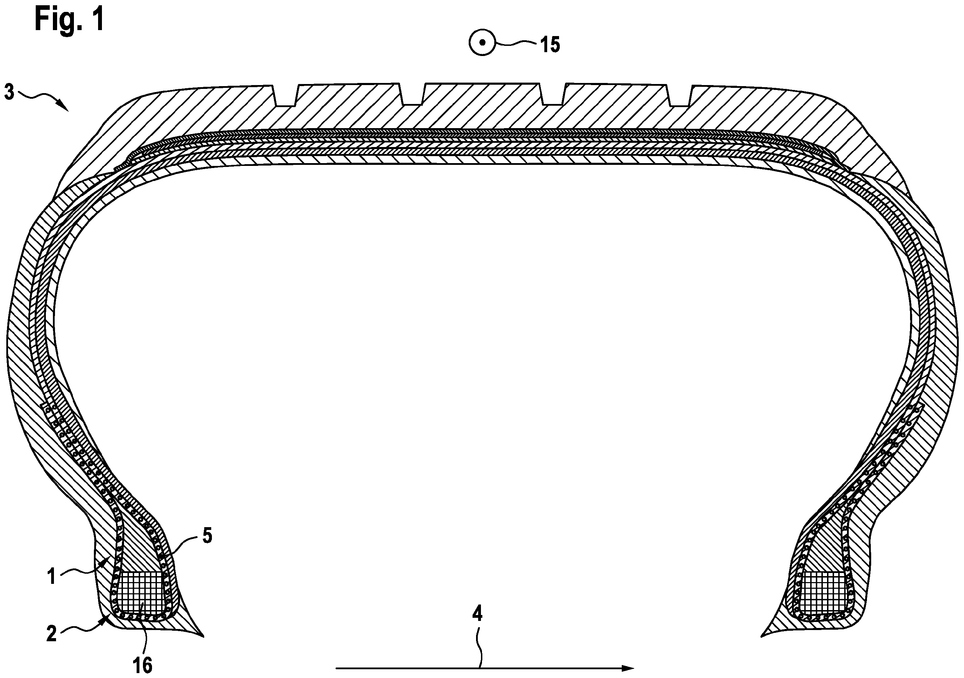

In der Figur 1 ist ein erfindungsgemäßer Wulstverstärker 1 zur mechanischen Verstärkung eines Wulstes 2 eines Luftreifens 3 schematisch dargestellt. Der Wulst 2 weist einen Wulstkern 16 auf. Der Luftreifen 3 ist gemäß der schematischen Darstellung in der Figur 1 in Radialschnittansicht dargestellt. Die Radialschnittansicht des Luftreifens 3 bezieht sich auf eine Rotationsachse 4. Der Luftreifen 3 rotiert während seines regulären Betriebs in Umlaufrichtung 15 um die Rotationsachse 4.

Der Wulstverstärker 1 weist mindestens einen Cord 5 auf. Dabei ist der mindestens eine Cord 5 aus mindestens einer metallischen Legierung ausgebildet.

In der Figur 2.2 ist ein erfindungsgemäßer Wulstverstärker 1 zur mechanischen Verstärkung eines Wulstes 2 eines Luftreifens 3 gemäß einer ersten Ausführungsform schematisch dargestellt.

In den Figur 2.1 und 2.3 sind aus dem Stand der Technik bekannte Wulstverstärker 1 zur mechanischen Verstärkung eines Wulstes 2 eines Luftreifens 3 schematisch dargestellt.

In der Figur 2.1 ist dabei der mindestens eine Cord 5, im Vergleich zu der Darstellung in der Figur 1, vergrößert dargestellt.

Dieser Cord 5 kann beispielsweise in dem in der Figur 1 schematisch dargestellten Wulstverstärker 1 angeordnet und verwendet werden. Dabei sind in der Figur 2 eine Innenlage 6 und eine Außenlage 7 des Cordes 5 dargestellt. Die Innenlage 6 weist mindestens ein Innen-Filament 8 auf. Die Außenlage 7 weist mindestens ein Außen-Filament 9 auf. Gemäß der Darstellung in der Figur 2.1 ist der Cord 5 im Querschnitt dargestellt. Das mindestens eine Innen-Filament 8 ist aus mindestens einem Draht ausgebildet; möglich ist eine Ausbildung des Innen-Filaments 8 aus beispielsweise 4 Drähten.

Das mindestens eine Außen-Filament 9 ist aus mindestens einem Draht ausgebildet; möglich ist eine Ausbildung des Außen-Filaments 9 aus beispielsweise 4 Drähten. Das mindestens eine Innen-Filament 8 und das mindestens eine Außen-Filament 9 erstrecken sich in eine Richtung 17 in dem Wulstverstärker 1. Die Richtung 17 liegt insbesondere parallel oder weitestgehend parallel zu der Umlaufrichtung 15 des Luftreifens 3.

In der Figur 2.1 sind sowohl die Innenlage 6 als auch die Außenlage 7 des Cordes 5 dargestellt. Gemäß der in der Figur 2.1 schematisch dargestellten Ausführungsform weist der Cord 5 einen Durchmesser 18 auf, der Durchmesser 18 kann vorzugsweise 0,72 mm bis 1,24 mm betragen.

In der Figur 2.2 ist die Außenlage 7 des Cordes 5 schematisch dargestellt. Schematisch dargestellt ist auch das mindestens eine Außen-Filament 9, das insbesondere einen Durchmesser 13 von 0,18mm bis 0,22mm aufweisen kann.

In der Figur 2.3 ist die Innenlage 6 des Cordes 5 schematisch dargestellt. Die Innenlage 6 weist einen Durchmesser 19 auf. Das mindestens eine Innen-Filament 8 weist einen Durchmesser 12 von beispielsweise 0,2mm bis 0,22mm auf.

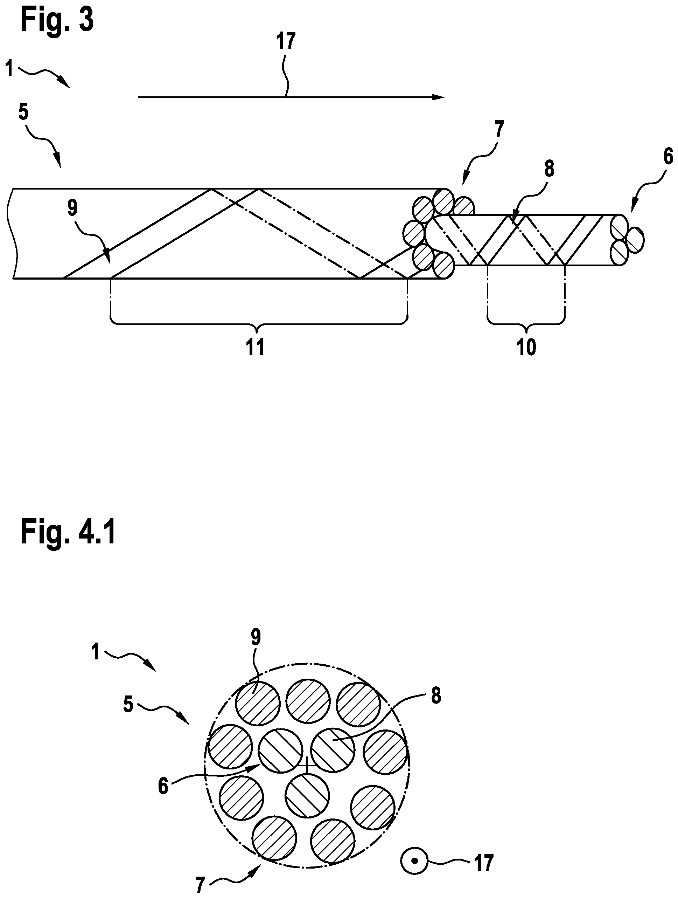

In der Figur 3 ist ein aus dem Stand der Technik bekannter Wulstverstärker 1 zur mechanischen Verstärkung eines Wulstes 2 eines Luftreifens 3 schematisch dargestellt. In der Figur 3 ist dabei der mindestens eine Cord 5 um 90° zu der Ansicht gemäß der Figur 2 gedreht dargestellt. Es handelt sich um eine im Vergleich zu der Darstellung in der Figur 2 seitliche Darstellung.

In der Figur 3 ist eine erste Schlaglänge 10 des mindestens einen Innen-Filaments 8 und eine zweite Schlaglänge 11 des mindestens einen Außen-Filaments 9 schematisch dargestellt.

Die erste Schlaglänge 10 entspricht der Länge, die das mindestens eine Innen-Filament 8 benötigt, um in der Innenlage 6 eine Drehung von 360° zu vollziehen.

Die zweite Schlaglänge 11 entspricht der Länge, die das mindestens eine Außen-Filament 9 benötigt um in der Außenlage 7 eine Drehung von 360° zu vollziehen.

Die erste Schlaglänge 10 des mindestens einen Innen-Filaments 8 ist von der zweiten Schlaglänge 11 des mindestens einen Außen-Filaments 9 verschieden.

Die Darstellung in der Figur 3 zeigt das Innen-Filament 8 und das Außen-Filament 9 jeweils in Seitenansicht.

Gemäß einer weiteren Ausführungsform ist die erste Schlaglänge 10 kleiner als die zweite Schlaglänge 11.

Die erste Schlaglänge 10 beträgt gemäß einer weiteren Ausgestaltungsform 3,8 mm bis 6,6 mm und/oder die zweite Schlaglänge 11 beträgt 6,2 mm bis 13,5 mm.

Gemäß einer weiteren Ausführungsform ist die erste Schlaglänge 10 kleiner als 3,8 mm und/oder die zweite Schlaglänge 11 ist kleiner als 6,2 mm.

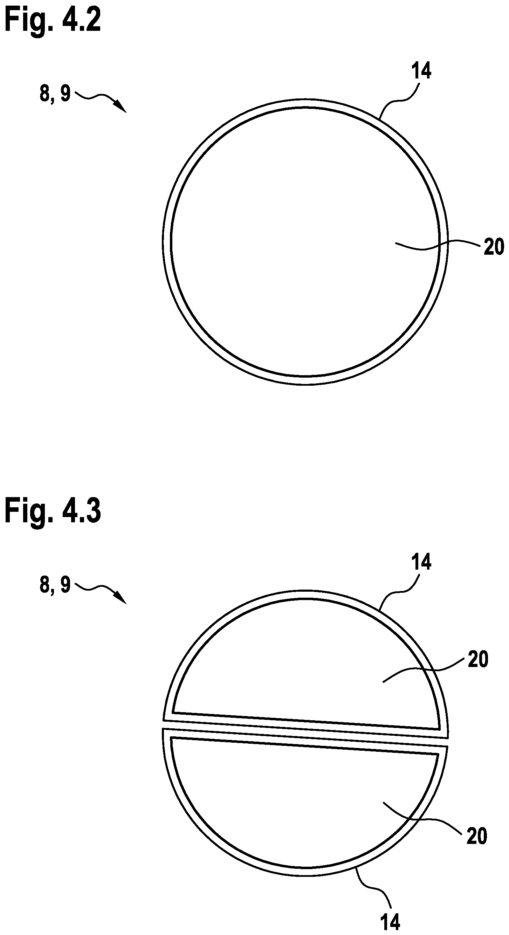

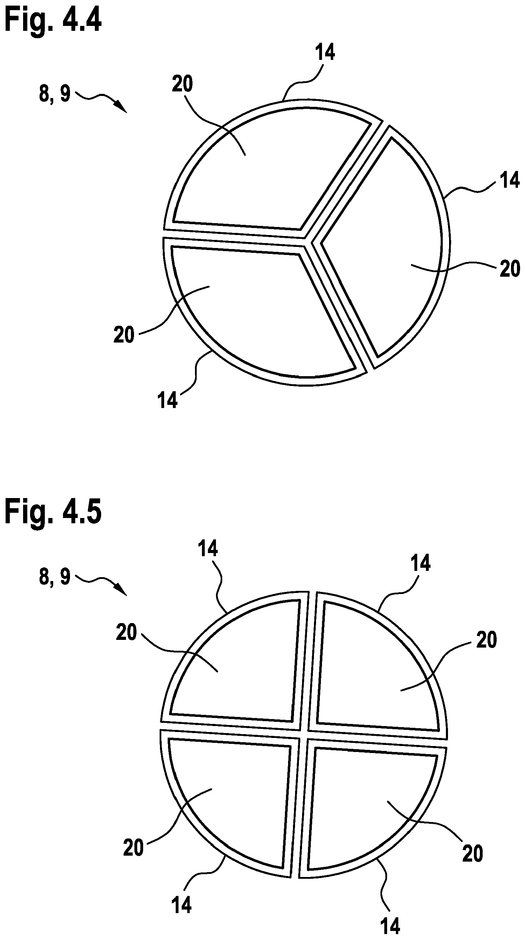

In den Figuren 4.2, 4.3, 4.4 und 4.5 ist ein Cord 5 eines erfindungsgemäßen Wulstverstärkers 1 zur mechanischen Verstärkung eines Wulstes 2 eines Luftreifens 3 gemäß weiteren Ausführungsformen schematisch dargestellt.

In der Figur 4.1 ist ein aus dem Stand der Technik bekannter Cord 5 eines Wulstverstärkers 1 zur mechanischen Verstärkung eines Wulstes 2 eines Luftreifens 3 schematisch dargestellt.

Gemäß der Darstellung in der Teilfigur 4.1 ist ein Cord 5 ähnlich wie der in der Teilfigur 2.1 dargestellt. Insbesondere kann zur weiteren mechanischen Verstärkung des Cordes 5 an dem Cord 5 eine Messingauflage 14 angeordnet sein. Die Messingauflage 14 kann direkt an den einzelnen Filamenten angeordnet sein.

Die Messingauflage 14 ist in den Teilfiguren 4.2, 4.3, 4.4 und 4.5 dargestellt. Jeweils dargestellt ist ein Filament, wobei es sich bei dem jeweiligen Filament um ein Innen-Filament 8 oder um ein Außen-Filament 9 handeln kann. Um das jeweilige Filament herum ist die Messingauflage 14 angeordnet.

Gemäß der Ausführungsform, die in der Teilfigur 4.2 dargestellt ist, ist das Filament aus einer Faser 20 ausgebildet. Die Messingauflage 14 ist um die Faser 20 herum angeordnet. Gemäß der Ausführungsform, die in der Teilfigur 4.3 dargestellt ist, ist das Filament aus zwei Fasern ausgebildet. Die Messingauflage 14 ist um beide der Fasern 20 herum angeordnet.

Gemäß der Ausführungsform, die in der Teilfigur 4.4 dargestellt ist, ist das Filament aus drei Fasern ausgebildet. Die Messingauflage 14 ist um jede der drei Fasern 20 herum angeordnet.

Gemäß der Ausführungsform, die in der Teilfigur 4.5 dargestellt ist, ist das Filament aus vier Fasern ausgebildet. Die Messingauflage 14 ist um jede der vier Fasern 20 herum angeordnet.

Die jeweilige Messingauflage 14 weist vorzugsweise zwischen 28 Gew.% Zink und 45 Gew.% Zink, bevorzugt zwischen 30 Gew.% Zink und 37 Gew% Zink, und/oder zwischen 55 Gew.% Kupfer und 72 Gew.% Kupfer, bevorzugt zwischen 63 Gew.% Kupfer und 70 Gew.% Kupfer, auf.

Die Messingauflage 14 weist ferner insbesondere ein relatives Gewicht von 3g/kg Draht bis zu 4,8g/kg Draht auf.

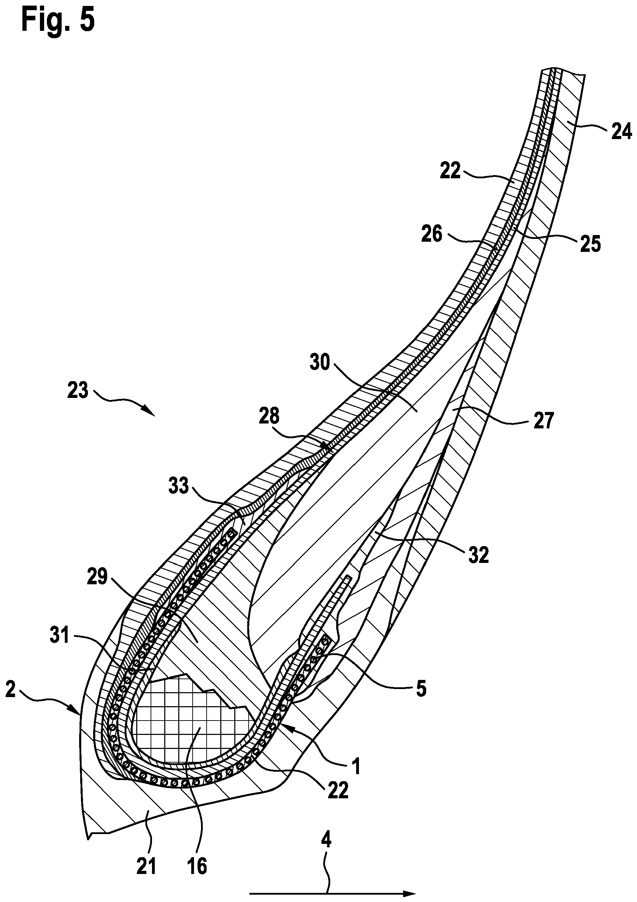

In der Figur 5 ist eine Radialschnittansicht durch einen Wulst 2 eines Luftreifens mit einer Radialkarkasse 23, beispielsweise für Steilschulterreifen für einen Schwerlasteinsatz, insbesondere auf Lastkraftwagen, sowie auf Aufliegern und Anhängern unterschiedlicher Ausführungen, aber beispielsweise auch für Bewegungsmaschinen und Gabelstapler, schematisch dargestellt. Die Radialkarkasse 23 weist eine Seitenwand 24, die im Wulst 2 einen Endabschnitt eines Hornprofils 21 überlappt, den Wulstkern 16, eine Karkasseinlage 25, die den Wulstkern 16 umfasst und axial nach außen einen Hochschlag ausbildet, ein Füllprofil 26 sowie ein Wulstaußenprofil 27, einen Kernreiter 28, der gemäß dieser Figur 5 zweiteilig ausgeführt ist und aus einem ersten Kernreiterelement 29 und einem zweiten Kernreiterelement 30 ausgebildet ist, eine den Wulstkern 16 im Wesentlichen parallel zur Karkasseinlage 25 und in Kontakt mit der Karkasseinlage 25 stehende und den Wulstkern 16 umlaufende Kernfahne 31, ein erstes Kantenschutzprofil 32 sowie ein zweites Kantenschutzprofil 33, die die Schnittkanten von der Karkasseinlage 25 und dem Wulstverstärker 1 einfassen und wobei das erste Kantenschutzprofil 32 radial weiter außen liegt als das zweite Kantenschutzprofil 33, und eine Innenschicht 22, wobei Endabschnitte der Innenschicht 22 und des Füllprofils 26 in dem Wulst 2 vom Hornprofil 21 überlappt werden, auf. Der Wulstverstärker 1 weist eine Elastomermischung 34 auf.

Die Seitenwand 24 und das Hornprofil 21, das Wulstaußenprofil 27, das erste Kantenschutzprofil 32 und das zweite Kantenschutzprofil 33 und das erste Kernreiterelement 29 des Kernreiters 28 und das zweite Kernreiterelement 30 des Kernreiters 28 sind profilierte Bauteile oder sind aus profilierten Bauteilen aufgebaut, die aus unterschiedlichen und für ihren jeweiligen Einsatzzweck geeigneten Elastomermischungen ausgeführt sind. Bei Nutzfahrzeugreifen, insbesondere für den Schwerlasteinsatz, wird der in der Figur 5 gezeigte geschichtete Aufbau aus Innenschicht 22 und Füllprofil 26 bevorzugt gewählt. Hierbei stellen die dimensionale Auslegung dieser Innenschicht 22 und die hierfür gewählte Elastomermischung der Innenschicht 22 eine notwendige Luftdichtigkeit unter den für den Luftreifen 3 einsatzspezifischen Bedingungen sicher.

Der Wulstverstärker 1 kann aus einer Lage oder aus mehreren Lagen, in eine Elastomermischung eingebetteter, paralleler Corde 5, insbesondere Stahlcorde, ausgebildet sein. Dabei verlaufen diese Stahlcorde über alle Lagen im Wesentlichen parallel zueinander. Der Wulstverstärker 1 kann ferner aus mindestens zwei Lagen ausgebildet sein, wobei es sich um zwei zueinander sich kreuzende Lagen der Stahlcorde handeln kann. Dabei verlaufen die Stahlcorde in jeder dieser Lagen im Wesentlichen parallel zueinander.

Bevorzugt wird ein Wulstverstärker 1 mit einer Lage aus parallelen Stahlcorden, wie in der Figur 5 gezeigt. Die Corde 5 des Wulstverstärkers 1 verlaufen unter einem Winkel zur Umlaufrichtung 15 von mindestens 14° und höchstens 42°, bevorzugt sind Winkel von 16° bis zu einschließlich 32° zur Umlaufrichtung 15. Eine Fadendichte der Corde 5 im Wulstverstärker 1 beträgt unter dem Wulstkern 16 mindestens 32 Corde je 100 mm Breite. Wobei die Breite des Wulstverstärkers 1 einer Ausdehnung des Wulstverstärkers 1 annähernd parallel zu der Rotationsachse 4 entspricht.

### Bezugszeichenliste

- 1: Wulstverstärker
- 2: Wulst
- 3: Luftreifen
- 4: Rotationsachse
- 5: Cord
- 6: Innenlage
- 7: Außenlage
- 8: Innen-Filament
- 9: Außen-Filament
- 10: Erste Schlaglänge
- 11: Zweite Schlaglänge
- 12: Durchmesser eines Innen-Filaments
- 13: Durchmesser eines Außen-Filaments
- 14: Messingauflage
- 15: Umlaufrichtung
- 16: Wulstkern
- 17: Richtung in die sich das mindestens eine Innen-Filament und das mindestens eine Außen-Filament erstrecken
- 18: Durchmesser des Corde
- 19: Durchmesser der Innenlage
- 20: Faser eines Filaments
- 21: Hornprofil
- 22: Innenschicht
- 23: Radialkarkasse
- 24: Seitenwand
- 25: Karkasseneinlage
- 26: Füllprofil
- 27: Wulstaußenprofil
- 28: Kernreiter
- 29: Erstes Kernreiterelement
- 30: Zweites Kernreiterelement
- 31: Kernfahne
- 32: Erstes Kantenschutzprofil
- 33: Zweites Kantenschutzprofil
- 34: Elastomermischung

## Patentansprüche

1. Wulstverstärker (1) zur mechanischen Verstärkung eines Wulstes (2) eines Luftreifens (3), wobei der Wulstverstärker (1) mindestens einen Cord (5) aufweist, wobei der mindestens eine Cord (5) aus mindestens einer metallischen Legierung ausgebildet ist, wobei der mindestens eine Cord (5) einen Innenlage (6) und eine Außenlage (7) aufweist, wobei die Innenlage (6) mindestens ein Innen-Filament (8) aufweist und die Außenlage (7) mindestens ein Außen-Filament (9) aufweist, wobei eine erste Schlaglänge (10) des mindestens einen Innen-Filamentes (8) von einer zweiten Schlaglänge (11) des mindestens einen Außen-Filamentes (9) verschieden ist, **dadurch gekennzeichnet, dass** eine Anzahl von Innen-Filamenten (8) 4 und eine Anzahl von Außen-Filamenten (9) 4 bis 11 und insbesondere 9 beträgt, wobei die erste Schlaglänge (10) 3,8 mm beträgt und die zweite Schlaglänge (11) 6,2 mm beträgt.

2. Wulstverstärker (1) nach Anspruch 1, **dadurch gekennzeichnet, dass** das mindestens eine Innen-Filament (8) einen Durchmesser (12) von 0,2 mm bis 0,22 mm aufweist und/oder das mindestens eine Außen-Filament (9) einen Durchmesser (13) von 0,18 mm bis 0,22 mm aufweist.

3. Wulstverstärker (1) nach einem der vorhergehenden Ansprüche, **dadurch gekennzeichnet, dass** der Cord (5) einen Durchmesser (18) von 0,72 mm bis 1,24 mm aufweist.

4. Wulstverstärker (1) nach einem der vorhergehenden Ansprüche, **dadurch gekennzeichnet, dass** der Cord (5) einen Längengewicht von mindestens 2,52 g / m aufweist.

5. Wulstverstärker (1) nach einem der vorhergehenden Ansprüche, **dadurch gekennzeichnet, dass** es sich bei der metallischen Legierung um Stahl handelt.

6. Wulstverstärker (1) nach einem der vorhergehenden Ansprüche, **dadurch gekennzeichnet, dass** das Cord (5) eine Messingauflage (14) aufweist.

7. Wulstverstärker (1) nach dem vorhergehenden Anspruch, **dadurch gekennzeichnet, dass** das die Messingauflage (14) zwischen 28 Gewichtsprozent Zink und 45 Gewichtsprozent Zink, bevorzugt zwischen 30 Gewichtsprozent Zink und 37 Gewichtsprozent Zink, und/oder zwischen 55 Gewichtsprozent Kupfer und 72 Gewichtsprozent Kupfer, bevorzugt zwischen 63 Gewichtsprozent Kupfer und 70 Gewichtsprozent Kupfer, aufweist.

8. Wulstverstärker (1) nach einem der Ansprüche 6 oder 7, **dadurch gekennzeichnet, dass** die Messingauflage (14) ein relatives Gewicht von 3,0 g / kg Draht bis 4,8 g / kg Draht aufweist, wobei der Draht aus einem Metall ausgebildet ist.

9. Wulstverstärker (1) nach einem der vorhergehenden Ansprüche, **dadurch gekennzeichnet, dass** das mindestens eine Innen-Filament (8) und/oder das mindestens eine Außen-Filament (9) aus je einer, zwei, drei oder vier Fasern (20) ausgebildet sind.

## Claims

1. Bead reinforcer (1) for mechanical reinforcement of a bead (2) of a pneumatic tyre (3), wherein the bead reinforcer (1) comprises at least one cord (5), wherein the at least one cord (5) is formed from at least one metal alloy, wherein the at least one cord (5) comprises an inner layer (6) and an outer layer (7), wherein the inner layer (6) comprises at least one inner filament (8) and the outer layer (7) comprises at least one outer filament (9), wherein a first length of lay (10) of the at least one inner filament (8) is different from a second length of lay (11) of the at least one outer filament (9), **characterized in that** a number of inner filaments (8) is 4 and a number of outer filaments (9) is 4 to 11 and in particular 9, wherein the first length of lay (10) is 3.8 mm and the second length of lay (11) is 6.2 mm.

2. Bead reinforcer (1) according to Claim 1, **characterized in that** the at least one inner filament (8) has a diameter (12) of 0.2 mm to 0.22 mm and/or the at least one outer filament (9) has a diameter (13) of 0.18 mm to 0.22 mm.

3. Bead reinforcer (1) according to one of the preceding claims, **characterized in that** the cord (5) has a diameter (18) of 0.72 mm to 1.24 mm.

4. Bead reinforcer (1) according to one of the preceding claims, **characterized in that** the cord (5) has a length per unit weight of at least 2.52 g/m.

5. Bead reinforcer (1) according to one of the preceding claims, **characterized in that** the metal alloy is steel.

6. Bead reinforcer (1) according to one of the preceding claims, **characterized in that** the cord (5) has a brass coating (14).

7. Bead reinforcer (1) according to the preceding claim, **characterized in that** the brass coating (14) comprises between 28 percent per weight of zinc and 45 percent per weight of zinc, preferably between 30 percent by weight of zinc and 37 percent by weight of zinc, and/or between 55 percent by weight of copper and 72 percent by weight of copper, preferably between 63 percent by weight of copper and 70 percent by weight of copper.

8. Bead reinforcer (1) according to either of Claims 6 and 7, **characterized in that** the brass coating (14) has a relative weight of 3.0 g/kg of wire to 4.8 g/kg of wire, wherein the wire is formed from a metal.

9. Bead reinforcer (1) according to one of the preceding claims, **characterized in that** the at least one inner filament (8) and/or the at least one outer filament (9) are each formed by one, two, three or four fibres (20) .

## Revendications

1. Renfort de talon (1) pour le renfort mécanique d'un talon (2) d'un pneumatique (3), le renfort de talon (1) comprenant au moins un câble (5), ledit au moins un câble (5) étant formé par au moins un alliage métallique, ledit au moins un câble (5) comprenant une couche intérieure (6) et une couche extérieure (7), la couche intérieure (6) comprenant au moins un filament intérieur (8) et la couche extérieure (7) comprenant au moins un filament extérieur (9), un premier pas d'enroulement (10) dudit au moins un filament intérieur (8) étant différente d'un deuxième pas d'enroulement (11) dudit au moins un filament extérieur (9), **caractérisé en ce qu'**un nombre de filaments intérieurs (8) est de 4 et un nombre de filaments extérieurs (9) est de 4 à 11 et notamment de 9, le premier pas d'enroulement (10) étant de 3,8 mm et le deuxième pas d'enroulement (11) étant de 6,2 mm.

2. Renfort de talon (1) selon la revendication 1, **caractérisé en ce que** ledit au moins un filament intérieur (8) présente un diamètre (12) de 0,2 mm à 0,22 mm et/ou ledit au moins un filament extérieur (9) présente un diamètre (13) de 0,18 mm à 0,22 mm.

3. Renfort de talon (1) selon l'une quelconque des revendications précédentes, **caractérisé en ce que** le câble (5) présente un diamètre (18) de 0,72 mm à 1,24 mm.

4. Renfort de talon (1) selon l'une quelconque des revendications précédentes, **caractérisé en ce que** le câble (5) présente un poids par longueur d'au moins 2,52 g/m.

5. Renfort de talon (1) selon l'une quelconque des revendications précédentes, **caractérisé en ce que** l'alliage métallique est de l'acier.

6. Renfort de talon (1) selon l'une quelconque des revendications précédentes, **caractérisé en ce que** le câble (5) comprend un revêtement de laiton (14).

7. Renfort de talon (1) selon la revendication précédente, **caractérisé en ce que** le revêtement de laiton (14) comprend entre 28 pour cent en poids de zinc et 45 pour cent en poids de zinc, de préférence entre 30 pour cent en poids de zinc et 37 pour cent en poids de zinc, et/ou entre 55 pour cent en poids de cuivre et 72 pour cent en poids de cuivre, de préférence entre 63 pour cent en poids de cuivre et 70 pour cent en poids de cuivre.

8. Renfort de talon (1) selon l'une quelconque des revendications 6 ou 7, **caractérisé en ce que** le revêtement de laiton (14) présente un poids relatif de 3,0 g/kg de fil à 4,8 g/kg de fil, le fil étant formé en un métal.

9. Renfort de talon (1) selon l'une quelconque des revendications précédentes, **caractérisé en ce que** ledit au moins un filament intérieur (8) et/ou ledit au moins un filament extérieur (9) sont chacun formés par une, deux, trois ou quatre fibres (20).
